# EUROPEAN PATENT APPLICATION

(11) **EP 0 984 631 A1**
(43) Date of publication of application: **08.03.2000**
(21) Application number: 98402187.3
(22) Date of filing: 04.09.1998
(51) Int. Cl.: H04N 7/173, H04N 5/00, G06F 17/30

(54) **Apparatus and method for executing interactive TV applications on set top units**

(71) Applicant: THOMSON multimedia, 92100 Boulogne Billancourt (FR)
(72) Inventor: Chevallier, Louis, 92648 Boulogne Cedex (FR); Houeix, Pierre c/o THOMSON Multimedia, 92648 Boulogne Cedex (FR); Letellier, Philippe c/o THOMSON Multimedia, 92648 Boulogne Cedex (FR); Dehoux, Olivier c/o THOMSON Multimedia, 92648 Boulogne Cedex (FR)
(74) Representative: Zhang, Jianguo

(57) **Abstract**

This invention provides a tool for executing interactive TV applications on set-top units (130) by representing the Interactive TV Application (ITVA) into a high level format such as the Interactive Application Description (210). This abstraction level will make it easier to port and share the ITVA between different tools and hence various Applications Providers. Besides, it conveys down ITVA to the decoder using this IAD discipline so that the Navigation Engine (NE) takes advantage of this high level representation through its memory management strategy and through the navigation support it can provide.

The present model separates the navigation structure of the Interactive Application Description (210), from the way it is rendered on the display by implementing Metaphor Elements (220). In fact, the MEs not only take care of the screen management but also manage the user inputs (240), that is to say the look and feel which can thus be dynamically changed.

According to the present invention, the Navigation Engine (230) which runs on decoders are to perform three main functions that are to load the Interactive TV Application on decoders; to Associate of the Interactive Application Description elements with particular Metaphor Elements and to make them operating together.

In addition with this well-defined interface between the IAD and the ME, a library of ME can be stored in the decoder, which saves bandwidth and RAM. Thus, the NE can select which type of ME should be used on each particular decoder depending on their hardware and software requirements so that an application can run on a stock of heterogeneous decoders.

## Description

### Technical field of the invention

The invention relates to information communications within interactive multimedia systems and more particularly to an apparatus and a method for executing interactive TV applications on set top units.

### Background art

The exchanges of information according to an environment of interactive multimedia devices involve at least a broadcaster and a plurality of multimedia terminals linked to the broadcaster by a communication network.

The interest shown by the consumer market in this technical field is growing. However, two issues are critical for the success of the emerging Interactive TV business that are the high quality interactive applications and the availability of powerful tools for producing these applications.

The production tools should be usable by designers with no knowledge of the downloading and decoders constraints. They should be well suited to TV production including live show management and broadcasting constraint.

The Interactive TV Application (ITVA) designers have to take into account the fact that the needs of consumers are different from the needs of computer station users. Another point is that, due to distinctive features of the TV network, the audio-video media has to be considered as a major media. Finally, the Interactive decoders specific constraints and features such as the limited memory, the CPU, the display, the IR remote command have consequences on both the design of ITVA and the underlying execution support.

OpenTV which provides OS support, graphic layer and network access functions on decoders is well suited to interactive decoders since a great effort has been put on resource conservation and availability to the user. It also provides basic and efficient functions which prevent the application from being hardware dependent regarding the graphic, the network and the CPU. OpenTV supports the loading and execution of ITVA in the form of program and data. But the ITVA developer has to develop his own applications using a development kit in a C language even though authoring tools may make this easier in the future.

Another inadequacy, regarding the portability issue, is that the translation of an application written in C into another system is a tedious process. The reason is that the structure of the application is buried within the code.

Furthermore, the addition of any feature in the application or the modification of the presentation style incurs checking into the code and regenerating the application.

And finally, a general feature, like the management of the memory for an application, has to be implemented into each application. OpenTV does provide basic mechanisms for that, but the developer still has to do the management. This management may be part of a library, but a runtime engine has to handle it. Among other inadequacies, it is to be noted that the interpreter is mono-thread which means that only one application can run at a time.

The tools that are available on personal computers does provide powerful and easy-to-use tools. The way they handle real-time audio-video material does not fit well with the broadcasting environment since they are treated as particular hypermedia objects. Little attention is given to memory conservation and to network management. The associated editors are WYSIWYG and intuitive. This translates to a look-and-feel tightly bound with the navigation structure of the application.

MHEG5 which owes its existence to the increasing convergence of broadcast and interactive technologies is a model derived from MHEG1. The latter has proved to be quite complicated whereas MHEG5 is a format which enables the description of interactive applications in terms of combination of interactive hypermedia objects. The scenes encompass all other objects. MHEG-5 represents an application which is a set of scenes containing objects common to all scenes. Typical objects handled by MHEG5 are button, video, sounds etc. It addresses the problems of transferring the application on the terminal by defining a coding scheme based on ASN1. An interpreter running on the terminal (or decoder) loads the scenes and presents them.

A very simple reactive behavior can also be specified (i.e. when a button is pressed, start a video). This feature is based on a set of elementary actions applicable to the objects. In order to get a more specific behavior, one has to rely on MHEG3 which defines how external applications can be linked to the MHEG5 interpreter.

However, in this approach, the designer has to cope with the list of MHEG5 objects. No other object can be created. The problem of linking a MHEG5 application with specific code may be tricky.

HTML (HyperText Markup Language) is a format that has been created for transferring hypertext documents over the Internet. HTML has been upgraded for including images and new objects like sound or video, but it does not support real Interactive Application. The HTML pages contains texts and other hypermedia objects and navigation link may exist between these objects and other pages. These links can get over the Internet network.

Java has been plugged into HTML in order to bring the ability to transfer programs along with HTML documents. It comes with a graphic and communication library. In this system, interactive application representation is supported both by HTML and Java data structure which may lead to a certain degree of inconsistency. Furthermore, Java can be implemented only in the Internet network.

The resources likely to be available on the decoders dedicated to the Interactivity TV will be rather small in the near future. This problem may get even worse if the interactive applications need to share their resources with other applications like the Electronic Program Guide EPG, and the Conditional Access.

With the release of successive units, with the power increase, the decoders suitable to load an ITVA in a country may display different capabilities. OpenTV ensures the independence from the CPU. But other things may evolve like the input management or the graphic resolution. The same ITVA has to run on every decoder.

Another problem of controlling the decoder has to be taken into account. Indeed, the current decoder is controlled by an Infra Red remote composed of few keys. For instance, the user may have to perform navigation with the 4 arrow keypads.

As a consequence, the Navigation Engine (NE) to be used within the decoders or the set top units, addresses the problem of handling navigation oriented Interactive TV Application on the decoders. It aims to solve the above mentioned points by representing the ITVA in a specific format called Interactive Application Description referred as IAD, which leads to a break down of the Interactive Application Description according to its navigation structure. This decomposition includes the audio-video material.

### Summary of the invention

It is a main object of the present invention to provide a tool for executing interactive TV applications on heterogeneous set-top units.

It is another object of the invention to represent the Interactive TV Application into a high level format such as the Interactive Application Description. This abstraction level will make it easier to port and share the ITVA between different tools and hence various Applications Providers.

It is a further object of the invention to convey down ITVA to the decoder using this IAD discipline. In this way, the Navigation Engine takes advantage of this high level representation through its memory management strategy and through the navigation support it can provide.

The present model separates the navigation structure of the application called the Interactive Application Description, from the way it will be rendered on the display. This is provided by Metaphor Elements (ME). In fact, the MEs not only take care of the screen management but also manage the user input, that is to say the look and feel.

According to the present invention, the Navigation Engine which runs on decoders is to perform three main functions:
- Loading the Interactive TV Application on decoders;
- Associating the Interactive Application Description elements with particular Metaphor Elements; and
- Making them operating together.

The method for executing a plurality of interactive multimedia applications transmitted from an interactive multimedia applications source to a processing means comprises the steps of:
(a) loading the plurality of interactive multimedia applications into the processing means wherein the plurality of interactive multimedia applications are based on a plurality of nodes for data representation and a plurality of links binding the nodes for dynamic representation;
(b) creating interactive graphical representation having a hierarchical structure composed of interactive elements so that the interactive elements represent an interface between the nodes and a user;
(c) mapping the interactive graphical representation to the interactive elements so as to enable the user to interact with the interactive multimedia applications by associating each nodes to each interactive elements; and
(d) executing the plurality of interactive multimedia applications in the processing means in response to user's commands.

The corresponding apparatus comprises:
- means for loading the plurality of interactive multimedia applications into the processing means wherein the plurality of interactive multimedia applications are based on a plurality of nodes for data representation and a plurality of links binding the nodes for dynamic representation;
- means for creating interactive graphical representation having a hierarchical structure composed of interactive elements so that the interactive elements represent an interface between the nodes and a user; and
- means for mapping interactive graphical representation to the plurality of interactive multimedia applications so as to associate each the nodes to each interactive elements.

According the present invention, an associated method for managing the plurality of interactive multimedia applications comprises the steps of:
(a) selecting sets of nodes that are the last recently used;
(b) discarding gradually from the local data storage among the selected sets of nodes, the ones that are at the bottom of the hierarchy;
(c) loading required set of nodes in the processing means in response to user's commands.

Conversely, an associated apparatus for managing the interactive multimedia applications comprises:
- means for selecting sets of nodes that are the last recently used;
- means for discarding gradually from the local data storage among the selected sets of nodes, the ones that are at the bottom of the hierarchy; and
- means for loading useful set of nodes in the processing means in response to user's commands.

By implementing the system according to the present invention, the following advantages can be obtained:
- Since there is a clear and well defined interface between the Interactive Application Description and the Metaphor Elements, a library of MEs can be stored (romed) in the decoder, which saves bandwidth and RAM. Thus, these Metaphor Elements may be well suited for a particular decoder.
- Furthermore, the look'n feel of the application can be changed dynamically by loading a new set of Metaphor Elements;
- The Navigation Engine can select which type of Metaphor Elements should be used on each particular decoder depending on their hardware and software requirements. This makes it possible to have an application running on a stock of heterogeneous decoders;
- The Navigation Engine handles the deep structure of the application. In this way, it is in a position to provide navigation help and generic mechanisms much like the features available on the Web browser such as marks and backtrack management;
- The Navigation Engine is able to provide intelligent memory management owing to the implemented structure. Besides, the Interactive Application Description may go through a virtual memory management using the broadcast bitstream;
- The dynamic behavior using Links may be obtained through local execution of pieces of code associated to the application;
- The Navigation Engine is able to know which part of the Interactive Application Description is necessary at a given time based on the pages the user is looking at. Thus, it may decide to defer the creation of Metaphor Elements or destroy others for making room for a new one.

### Brief description of the drawings

Figure 1 represents an environment of the present invention with the different sources for an Interactive Application Description.

Figure 2 represents inside components of a set top unit.

Figure 3 represents a structure of an Interactive Application Description.

Figure 4 represents a model of a hierarchy within a Navigation Engine.

Figure 5 shows a data transmission between the Navigation Engine Modules, the Actors and the Navigation Engine.

### Detailed description of the invention

The Navigation Engine has been designed after a survey of the existing models for Interactive TV and of what is currently at the disposal of interactive application designers in the world of television and the world of computer. Thus, it makes it possible to define additional actors with specific behavior if the application needs it

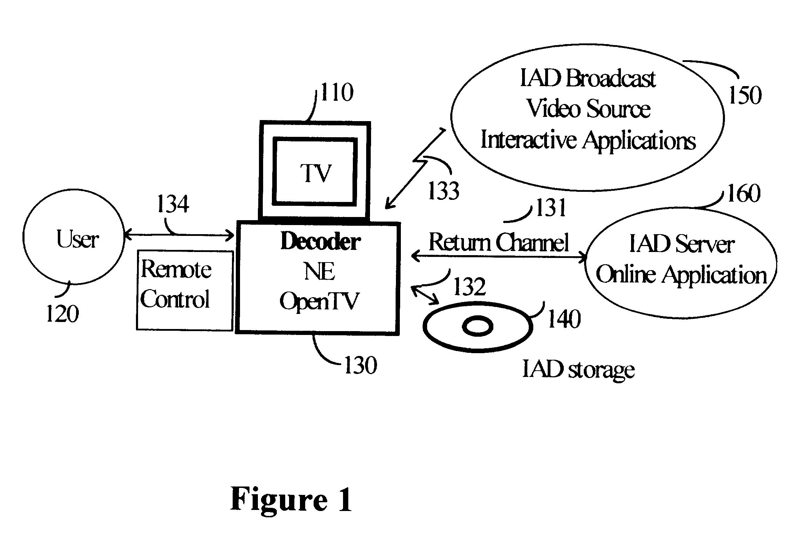

By referring to figure 1, the Navigation Engine (NE) is a software running in set top units or decoders (130) wherein OpenTV is preferably implemented. The NE loads and runs Interactive TV Applications received from an interactive application emitter (150). The Interactive TV applications are described in a specific format called Interactive Application Description referred as IAD. The decoder (130) is connected to a TV set (110) and communicates with a user (120) through a remote control (134).

According to the present invention, an engine type approach is used wherein the IAD structure involves high level objects that are parts of the applications. The NE defines a list of basic interactive elements called actors that are associated to these objects.

The IAD is transmitted to the decoder through a protocol that is based on NEMessages. These NEMessages may be transported by various low level transport protocols. The IAD format and NEMessages allows to alter the running applications which provides a support for live events management.

The IAD also makes provision for audio/video management. For this purpose, the IAD and the code of the actors are downloaded on the decoder along with the audio/video material. The IAD and the actors can also be loaded by the decoder on a return channel (131) from an IAD Server with an on-line application (160) or retrieved from a storage device (140).

Once a part of an IAD is loaded, it is called a Local Navigation Graph, referred as LNG. An LNG is a set of nodes creating a minimum interactive application which is for instance an interactive page. This page enables the TV spectator to access other pages; the set of all these pages or objects makes up an interactive application.

The model according to the present invention separates the navigation structure of the application, from the way it will be displayed on the screen owing to Metaphor Elements (ME). In fact, the MEs not only take care of the display management but also manage the user input, that is to say the look and feel.

The Navigation Engine runs on decoders. Its three main functions are:
- Loading the Interactive TV Application on decoders;
- Associating the Interactive Application Description elements with particular Metaphor Elements; and
- Making them operating together.

The representation of the ITVA into a high level format, such as the IAD will make it easier to port and share the ITVA between different tools and hence various Applications Providers. Thus, the ITVA are conveyed down to the decoder using this IAD discipline. Henceforth, the NE itself takes advantage of this high level representation through its memory management strategy and through the navigation support it can provide.

Some MEs designed for that purpose may be grouped together to form a Metaphor. This idea has proved to be required to build successful Man Machine Interface (MMI). The present system supports the use of libraries of Metaphor Elements. This should bring to the design of reusable libraries containing high quality ME well suited to the consumer market. Furthermore, the choice of the ME for an ITVA is (partly) left to the NE. Then, it may take into account the decoder resources available, the consumer profile, or the country where it is running to choose the right ME for a given ITVA.

As is previously mentioned, the Navigation Engine according to the present invention, is based on a high level description of the Interactive Application Description. The involved data structure describes the deep structure of the applications in such a way the actual presentation of the applications is handled by Metaphor Elements.

The Navigation Engine runs continuously on decoders. When an IAD reaches the decoder via the broadcast stream (133) or the end-to-end network (131), the NE loads this IAD, creates the interactive objects and provides means for having them work together.

Thus, according to the present invention, the Navigation Engine which is built on top of OpenTV performs the main following actions:
- Load the application in the form of IAD;
- Create and apply Metaphor Elements to the IAD;
- Activate and notify Links and Metaphor Elements; and
- Manage the Navigation through the IAD.

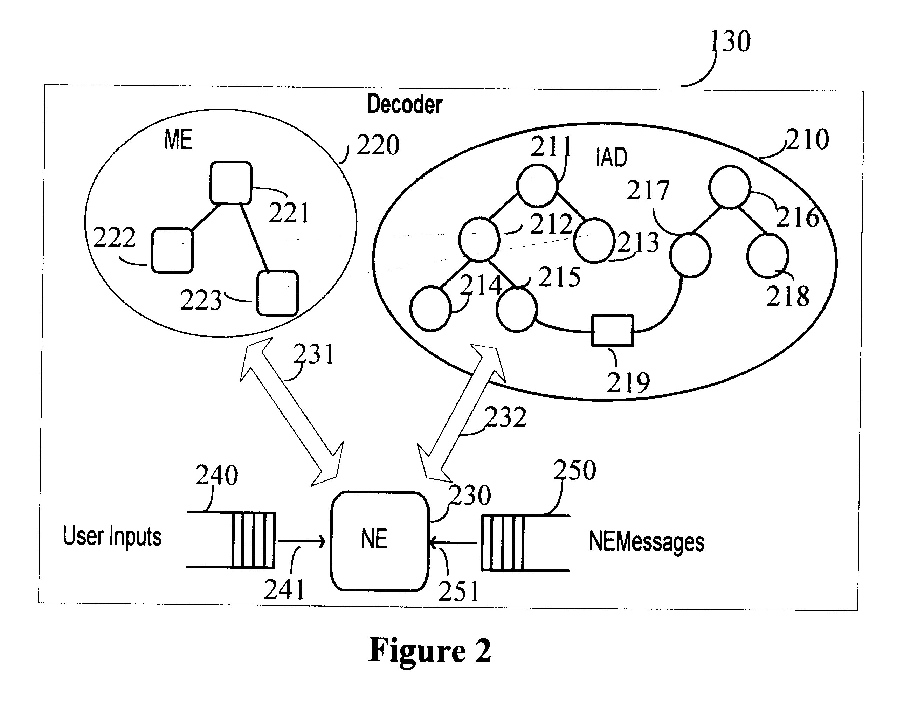

Figure 2 describes the architecture of the Navigation Engine wherein the IAD is transmitted (251) to the NE (230) within the decoder through a protocol NEMessages (250). Conversely, the user inputs (240) are transmitted (241) to the NE.

The NE is an interactive program whose detailed tasks are:
- to get lADs from various channels (i.e. the broadcast channels, return path). Once an IAD has been loaded, the nodes in the graph are associated to interactive elements, the actors. Special (but very commonly used) actors have a graphical representation. They are called the *metaphor elements* (ME). The process of associating an actor to a node of the LNG is called the *mapping* of the node;
- to get messages from the broadcast channel (133) or by other means to update the current LNG;
- to react to the user inputs (240). This may involve catching parts of the IAD that are not yet in the STU, mapping or unmapping already loaded nodes, etc.
- to manage the actors communications from one to another.

The NE separates, as is represented by arrows (231,232), the navigation structure of the application represented by the IAD (210) from the Metaphor elements (220) the compositions of which will be described later on. It should be able to cope with any network for loading the Interactive Application Description and the Metaphor Elements including the end-to-end network.

During the operation of the NE, two kinds of messages may appear;
- The *NEMessages* (250) are OpenTV messages that indicate system events like user input (240), OpenTV module arrival and any other asynchronous event.
- The *NEEvents* are internal to the NE. They are used to exchange information between the actors and the NE in an asynchronous way. This information includes navigation or mapping requests.

The IAD structure is based on the Nodes and the Links. The Nodes and the Links respectively provide data representation and dynamic representation.

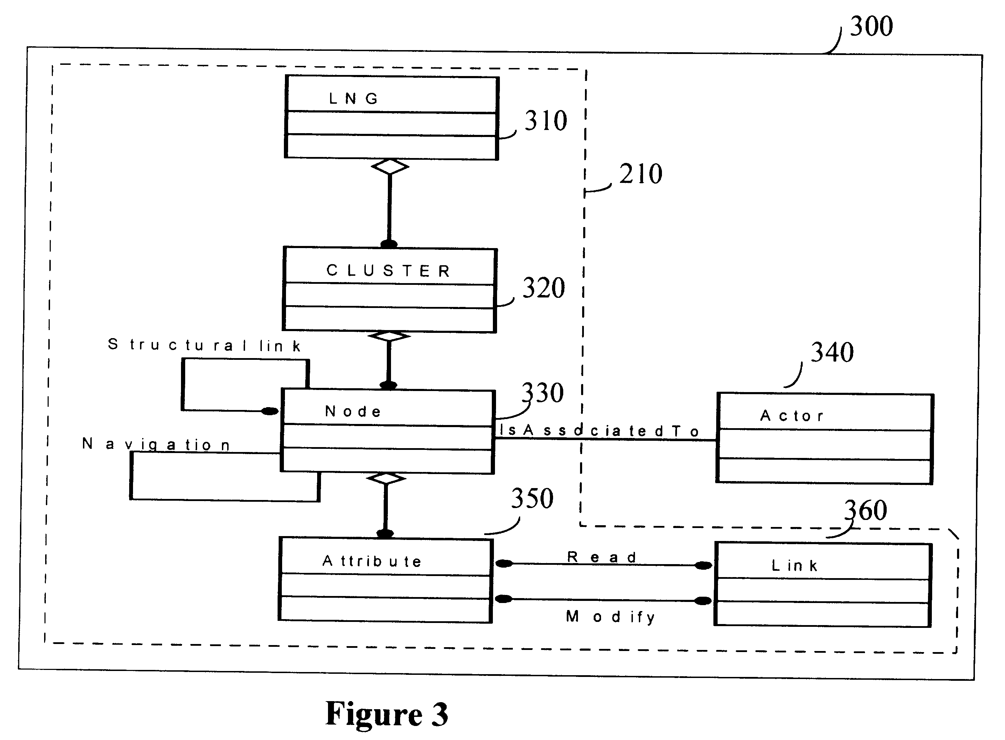

Figure 3 uses the object modeling technique referred as OMT, which is an object oriented methodology dedicated to the description of software system. It describes the structure of the IAD (210) wherein to each LNG (310) corresponds a running application. Clusters (320) are composed of a plurality of nodes, one of which (330) is represented in this figure 3.

The nodes (330) are connected to each other by Structural links. They own attributes (350) that characterizes their specificity i.e. the label of button or the identification of audio/video bitstream. The Navigation link is dedicated to the representation of the navigation inside the IAD which may be also implemented by the Link (360).

This structure is transmitted to the NE wherein the Nodes are associated to Actors (340) which handle the interface between the Nodes and the User. The structure that is built by the NE from the transmitted IAD is the Local Navigation Engine (LNG).

The Nodes are connected together to form a graph and they own a list of *attributes.* These attributes have a name and a value; the latter may change during the application execution. The nodes are connected together by 2 types of links: *structural* links and *navigation* links. Structural links are intended to support the organization in screens of the interactive applications or the structure related to system objects (video, return channel). The navigation links serve the purpose of navigation.

As is shown in Figure 3, *Clusters* are sets of Nodes connected by structural links. The clusters provide the unit of memory management for the NE: all the nodes in a cluster are loaded and unloaded together. The clusters should not be too large in order to fit in memory size.

Structural links exist only within the clusters; they must not form loops. Navigation links occur within and between the clusters. They can form arbitrary graphs. The navigation links may be activated by the Actors or by the Links. Upon the activation of these links, the NE should load and map the cluster on which they are pointing.

As the nodes in a cluster are loaded together, the clusters are used to represent indivisible parts of applications such as screens or portions of screens.

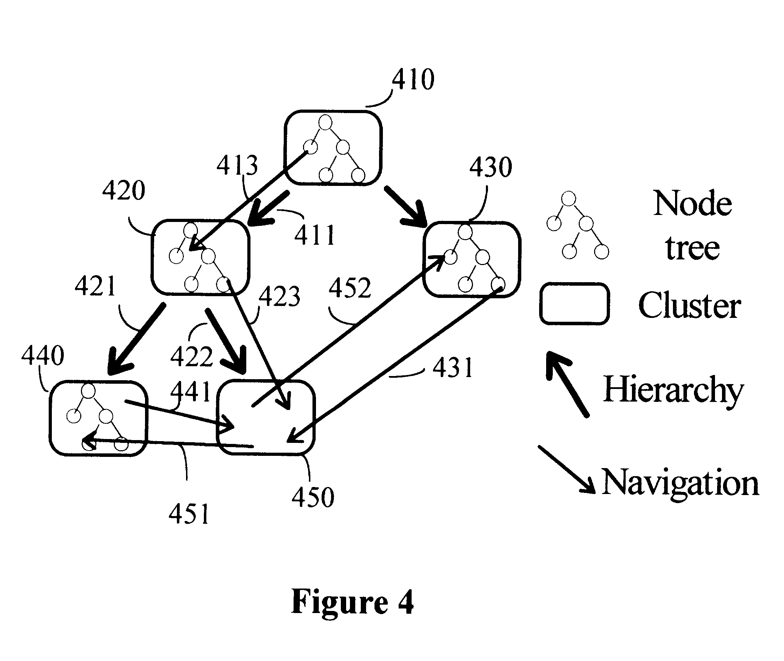

Figure 4, shows a representation of the clusters and its hierarchy within the Interactive application description of the Navigation Engine.

The clusters (410, 420, 430, 440, 450) of a plurality of interactive applications form a tree. This tree defines a hierarchy among the clusters. This hierarchy is represented by thick arrows (411, 412, 421, 422). The NE ensures that, when a cluster is loaded, all the clusters on the path from the root of the tree to this cluster are also loaded. Thus, objects common to two clusters (actors, variables) should be located in the cluster which is over these two clusters. The top cluster (410) of an application groups the parts of the application that are common to the whole application.

The Navigation, which is represented by simple arrows (413, 423, 431, 441, 451, 452), is the process of moving into the IAD. These movements can occur from one cluster to another one. They may need the mapping of additional actors or the loading of missing parts of the LNG. The NE will automatically manage the memory by discarding useless parts of the LNG or deleting some useless actors.

The values of the attributes can be represented by terms which are data structures. These terms are for instance an integer, a char, a float, a Boolean or a list of the previous types or list of lists.

An API enables to read and create terms and to set the attribute values. A coding scheme enables to store and to retrieve terms from memory.

When loading and processing the messages describing the IAD, the NE decodes also the term values. Since these values may represent large data structure (texts), it is not desirable to move or copy these data from one memory location to another in the decoder, but rather to share the data representation as much as possible. In particular some actors, like actors presenting texts, should avoid to copy the value of the term. This is possible when the attribute in question is supposed to have a constant value.

### The Interactive Application Description

The IAD is the central data structure of the Navigation Engine. Its purpose is to represent the interactive applications. This piece of data is downloaded on the decoder and parsed and loaded by the Navigation Engine. It may be broadcast or transmitted by any other means.

The IAD is data (object)-oriented rather than program oriented because the chance of finding many data with the same pattern or common generator is low in an interactive application compared to series of data like prime numbers or a file containing records which imply underlying common software. The typical Interactive Application would, on the contrary, abounds with data with no similarity between them.

The IAD is made of *Nodes* (211, 212, 213,..., 218) as referred to figure 2. They are linked together forming a graph like structure. The nodes own a set of *attributes* which bear a name and carry data of any kind (text, number). When loaded by the NE, the nodes are associated to interactive elements which provide the actual look'n feel.

An IAD contains also small programs which link the nodes together in order to define dynamic relationships between them. The *Links* enables to bring dynamic behavior. Links are able to change the value of some attribute whenever a given condition is met. This condition is computed from other attributes.

Henceforth, the IAD models the way an ITVA is downloaded into the decoder. The structure of the IAD allows to load partially the application. The loading of the IAD in the memory by the NE involves the loading of 3 types of data:
- The IAD with its Node structure, Link code and data;
- The actors description and code; and
- Specific data required for the actors that cannot be put in the IAD.

### Nodes, Links, Clusters

The IAD is transmitted through 3 types of NEMessages:
- Creation messages. These messages give the structure of the nodes (sub-nodes, attributes) and the description of the links. A creation message corresponds to a cluster;
- Modification messages and destruction messages; and
- Code of the links.

Each node or link owns a unique ID that constitutes a global name used by subsequent modification or destruction messages. Conversely, clusters are also given an ID for memory management purpose.

### Actor type description

New type of actors may be downloaded into the decoders. A type of actor is described by its code and some information that will enable the NE to select this actor for associating it to a given node.

The code is supposed to be dynamically linked with the NE. Since this code may be developed independently it must follow a defined API. OpenTv provides a mechanism enabling this loading.

The list of functions corresponds to a Creation of a new instance, a Destruction, a Preparation, a Notification, a Timer notification or a Test of compliance with the decoder.

The information associated with the type of actor is:
- The name of the type of actor and
- The type of actor it subsumes, which enables a same IAD to be presented with different type of actors on different decoders.

### Data loading

This mechanism of data loading makes it possible to provide Actors with data coming from the bitstream or from the return path that are not directly inserted into the IAD structure. This makes it possible not to load the data or to postpone the loading of the data until they are needed. The broadcaster may decide to insert these data knowing which type of Actors he is sending along with the LNG.

These data are different from the LNG since they may be specific to a particular set of Actors. These pieces of data are called *NEModules,* they can even be stored in the ROM. The NEModules are pieces of data of any length whose structure is only known by the recipient. The NE sees these data as a sequence of bytes.

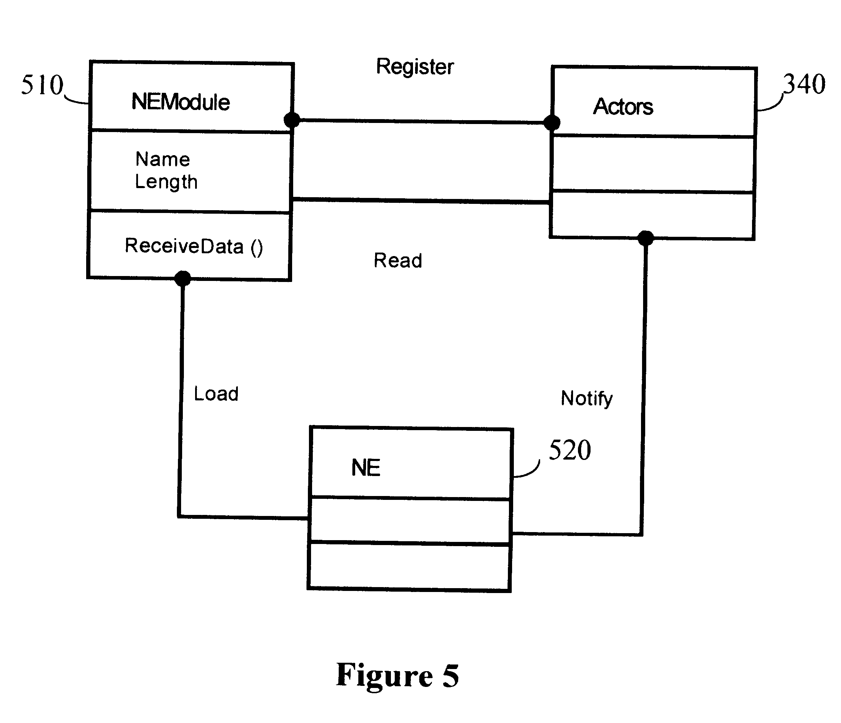

Figure 5 represents the different operations of the NEModules that occur in the Navigation Engine (520) wherein each NEModule (510) has a NAME, a LENGTH and contains a buffer of LENGTH bytes.

The NEModule (510) API provides means for:
- Registering (512) an actor (340) that wants to be notified (518) when the next NEModule of a given name arrives.
   The registration is valid until the actor is deleted or until the actor cancels it for NEModules of this name, which means that an actor will be repeatedly notified each time a NEModule of the given name reaches the decoder. The registration may fail for internal reason: memory exhaustion. invalid name. Two actors (340) may register (512) for the same name.
- Canceling the registration can be made by an actor. If two actors register for a same name and one of them cancels its registration, the other remains registered since the registration is handled independently actor by actor.
- Reading (514) a buffer after a notification (518) so that an actor may read the buffer associated with the NEModule just arrived. If a new NEModule of the same name arrives in the mean time, the actor will read the last NEModule content.

Regarding the notification (518), the NE does its best. Some NEModules may be lost if too many NEModules arrive in a short time.

The structure of the data contained in NEModule is not specified; it may be structured like Terms in which case the Term management API is available.

### Links

The Links enable to specify the dynamic behavior of an IAD independently from the actors. They work on the attributes of the nodes and they consist in a piece of code that can perform test and affectation on attributes. The Links are made of a trigger expression and an action function. Their expression depends on some attributes; it is checked by the NE each time one of these relevant attributes is modified. When the expression evaluates to a true status, the action is executed.

Standard control structures are available for coding the action along with standard operators. The values handled by the Links are the Terms. The expressions are built using constant and value of attributes.

Primitive actions available in actions are as follows:
- affect a new value to an attribute.
- wait <delay> - and
   at <date> do To suspend the execution of the link.
- exit - To exit from an application.
- navigate <node> - To navigate toward a Node.
- backward, forward, next, previous, up, down - To use the navigation function offered by the NE.

Besides, a link is associated to a cluster. It may access any attributes of any Node in the cluster and of the Node of top clusters.

### The Metaphor Elements

The Metaphor Elements (ME) handle the graphic presentation of the IAD. In order to be displayed on the screen and to offer a chance to the user of interacting with it, a node must be *mapped,* i.e. associated to a particular ME. The NE is in charge of performing this association.

The Metaphor Elements are managed in an object oriented manner. A set of *classes* of Metaphor Elements are managed by the NE. New classes may be added dynamically. These classes of Metaphor Elements describe the capabilities of the ME. The NE uses this data structure when choosing an ME for mapping a piece of IAD.

The ME are based on the OpenTV gadget. The code of the ME (graphical functions) are coded using the OpenTV o-code interpreter. The Metaphor Elements can be downloaded along with the IAD, but they can also be romed into the decoder.

A list of basic ME has been defined. These ME should make it possible to carry out most of the interactive applications. These basic ME include screen, button, label, text. Their specification does not involve the look and feel but concentrates only on fundamental functions. This enables to develop various set of basic ME with sophisticated graphical features which retain the compliance with the basic one and hence are still usable on the original interactive application.

### Actor class management

An equivalency scheme is defined between the actors: this scheme enables a same Interactive Application to be presented on each decoder with the best possible result with a different look & feel. On a decoder, the MEs are selected depending on the capabilities of the decoder.

Actor classes are grouped together into an Actors set. An actor set contains the code of the actors and a function which tests whether the contained actors can run on the decoder so that the NE is able to select the actors set appropriate for the particular decoder.

The code associated to each ME class complies with a well-defined API. This code is supposed to be downloaded into the decoder at run time and dynamically linked.

At a given time, an actor is attached to one node (the node is said to be mapped).

Actors and MEs share some fundamental functions:
- Creation / Destruction;
- Preparation;
- Association / Dissociation to a node. This makes it possible to attach an actor to many nodes successively;
- Activation / Deactivation - An actor is visible or not depending on its activation status;
- Notification. An actor is notified whenever one of the attributes it is interested in gets a new value or when the node structure changes. A notification is also associated to a timer expiration or when data arrive;

### Metaphor Elements Management

Metaphor Elements are a special kind of actor that are dedicated to graphical user interface. These actors may involve a tight cooperation between them, thus a specific management needs to be designed. When a Pane manages sub-Actors, the problem is to have these sub-actors displayed as smoothly as possible. In the case of a Pane managing a set of buttons, the sequence of events is as follows:
1. The Pane is created
2. The Button is created
3. The Pane determines the actual position of the Button
4. The Pane is drawn with its sub-actor

The button is displayed only when its final position has been set.

### Implementation

The actor implementation relies on the OpenTV UIMS gadgets (user interface management system) so as to take advantage of the graphical objects management.

In order to handle the ME, an API is defined. This API contains different functions that are related to geometry. Since the MEs are based on gadget, they must be compliant with the OpenTV UIMS policy, especially regarding the processing of some messages (NEW, ACTIVATE, FOCUSED, ...).

In particular, the NE expects that the ME will handle the DELETE and ACTIVATE messages. Besides, the NE adds the following messages:
- PREPARE
- TIMER
- NAVIGATE

In order to follow the policy of OpenTV, the Actors are notified through the same message handling function such as:
- Creation
- Destruction
- Activation
- Focus
- Preparation
- Configuration
- Notification (timer, attribute, navigation)

### Basic Metaphor Elements

A set of basic MEs is defined so as to represent the minimum set of ME that composes a metaphor. They have a fundamental behavior that may be altered by some attributes. Custom metaphors may override the basic ME in order to provide some sophisticated look and feel. The basic MEs use attributes in order to determine their look and feel and their graphical parameters. There are common attributes and specific attributes.

A set of ME could be stored in the ROM of the decoder with the common attributes that are as follows:

### Common attributes

Some attributes are shared by all the MEs and theirs effects are the same:
- Map (Boolean): To have the ME displayed or not
- X, Y (integers): indicates the position of the ME in the Screen
- Width, Height (integers): may be read-only: the actor may or may not take them into account
- Font (integer): for displaying the text, an index in the font table
- Sensibility (Boolean): whether the ME accepts the user inputs
- Foreground index in the colormap
- Background index in the colormap
- Border
- Picture is in bitmap OpenTV standard
- Activation should be triggered on Enter key press.

The composite actors get the key events not consumed by their sub-actor.
- FocusCirculation describes how the focus should be passed among the actors
- Shortcut gives the list of keys the actor wants to manage

Many attributes can have their values either directly stored in the associated term or stored in a NEModule whose name is given in the term.

There are specific attributes that are associated to the actors that are as follows:

### Audio

The audio actor manages audio streams which may come from a network such as the broadcast or return channel, or they may be stored in the memory. The frame is the basic time unit.

### Video

This video actor manages video streams which may come from a network such as the broadcast or return channel, or they may be stored in the memory.

### Background images

This background images actor displays an image in the background.

### Button

The button actor is an interactive element that enables the user to trigger an action, it may display a text, an icon or an outline.

### Label

This label actor displays a one-line text or a picture. It is not sensible and it may display an icon.

### Picture

The picture actor displays a picture which is supposed to be bigger than the icon associated to the button or label. Since it may take time to load the pictures, the Picture actors could provide for progressive loading that can be interrupted if needed

### Drawing

The drawing actor displays drawings which are displayed based on the reference point defined by (X, Y). The drawing is described with a proprietary format. It may be produced by translation from CAD tools file.

### Animation

The Animation Metaphor Element displays a graphical animation.

### Entry field

An entry field enables the user to enter a value. This value may be numeric or alphanumeric. The value should be displayed on one line. The entry field could make use of any trick for making it possible to enter arbitrary text from the numeric keypad of standard remote command.

### Toggle

A toggle actor enables the user to enter a Boolean value.

### Text

The text actor displays a text read-only. It may be multi-line (a line is ended by '\n').

### Pane

The pane actor manages the ME attached to the sub-nodes of its attached node. It is a composite ME. The Pane ME will arrange its sub-MEs in row or column.

### Menu

The menu actor is a Pane which has a behavior of a menu. It assumes that its associated node is the root of a tree that represents the menu tree. This tree should contain subMenu and Buttons The tree may be displayed with pull down menus or any other mechanisms.

### List

The list actor is a composite actor that enables the selection of elements. It assumes that its associated node has sub node which will be associated to Button. The Button will be activated by the list.

### Container

The container actor merely manages sub actors that are by applying a default behavior like propagating the activation and deactivation to its sub actors.

A container is required for managing the sub-trees of a node that are stored in different clusters.
- Exclusive If present, only one of its children will be active at a time. If one of them is activated (by navigation) it deactivates the other.
- Activation The Container gets the key event not consumed by their sub-actor. The Activation attribute should be triggered on Enter key press.

### Top level actors

There are 2 top level actors: the screen and the sheet. The toplevel actors are used by the NE to manage the navigation. The node linked to a toplevel actor is typically the root node of a cluster. A function associated to these actors indicates if it is mapped.

A Screen is a toplevel ME. That means that all its sub-MEs will be displayed at the same time (depending on their mapping status). A Screen may involve video and audio. The video is then displayed in the background. Still images can also be contained in these actors. The screen is aware of the fact it manages MEs; hence, it practices the ME API. Only one Screen can be mapped at the same time, and only one screen may be active at a time, this means that when a screen is navigated, the current one is discarded (inactivated)

A Sheet is similar to the Screen except that many sheets may be activated at a same time, in this case they share the screen space.

### High Level actors

High level actors can be defined for common mechanisms like:
- A help to the navigation. These actors make use of the navigation structure of the applications. They may rely on intuitive graphical representation of graph, trees or the current state of the stack.
- The VCR type user interface for browsing through a linear structure.

It should be kept in mind that in another preferred embodiment, custom ME can be defined for the purpose of an application with specific requirements.

### Navigation Engine operating

### Application

The notion of application is introduced in the NE which enables the NE to support many applications at a time without mixing some private data to each application including the context of the application.

Presently, this context contains the color look-up table, the metaphor, the state and the navigation path.

There are 4 functions applicable to the applications. The NE can start and kill applications so that an application is started when the NE receives the ApplicationDescription message and it is killed when the ApplicationEnd message is received. In addition an application can also be suspended and reactivated.

Each application is given a unique ID. Every message carries the id of the application to which it is related. Only one application is active at a time. In order to get user input, the application must be in the active state. When an application is suspended, all the related active toplevel actors are deactivated.

The NE manages a list of applications. The memory management will give a priority to each active application.

### Timers

Some Actors may need to be notified at definite times. The associated notification function is defined here along with the NE call that enables this notification. The notification is achieved by sending a special message. A dedicated function enables an actor to start a timer.

These timers may be used for animation purpose. The management of the timers is performed locally. In OpenTV, the main loop must be modified each time a timer is added.

The Actor will be notified by means of a dedicated message (TIMER) and an actor may have many timers pending at the same time.

### Activation of Navigation Links, Handling of Navigation

When a Navigation Link is activated, the node at its end may not be loaded in memory. The NE will detect this situation and it will load the cluster containing the node. This loading may take time: in a broadcast application, the module containing the cluster must may be scheduled some time after; if the application is transmitted over the return channel, the data will take some time to get to the decoder.

When the cluster has arrived, the process of mapping the node in question takes place and the actor associated to the node is then notified. This notification indicates that the node has been "navigated to".

The NE automatically tracks all the navigation events in order to enable a backtrack.

Since many nodes may be displayed (or activated) at the same time, the navigation into the IAD involves managing many paths simultaneously. The NE handles and records all the paths.

Navigation links have a starting node and an ending node. When the navigation is performed, it is possible to discard the actor hierarchy containing the actor associated to the starting node. This is achieved through the call which leads to the deactivation of the corresponding actors.

### Local Navigation Graph Access

The LNG is a data structure handled by the NE. The LNG is an image of a portion of the IAD of an application. Since many applications may run on the IRD at the same time, many LNGs may be handled by the NE simultaneously.

The LNG may be partly in the memory of the IRD. The rest may be available on the bitstream (broadcast) or available on a remote server or stored on a media like a DVD.

The NE offers a set of functions giving access to the LNG from the Actors. This API hides the details of the internal management and particularly the memory management.

The NE and the actors run only as one thread. Therefore, it is not possible to rely on suspension of an Actor, which would be implemented as a thread) for handling the loading of missing part of the LNG. Instead, the Actor can be enforced to only access to part of the LNG that are in the memory. This is achieved by setting up a discipline concerning the traversal of the LNG. An Actor may not access any part of the LNG. To do so it must ask the NE to give access to it.

An Actor has a permanent access to Node associated to it. In addition, an actor and its main Node may ask for accessing sub-node of their main Node.

The following API contains a set of public functions that are used by the NE and by the Actors.

### Actors access to the LNG

The Actors access to their associated Node through the 2 functions as_GetAttributeValue () and v_SetAttributeValue ().

Actors may access to the LNG from any of the methods defined in the root classes: creation, deletion, various notification methods.

### Mapping the LNG

When a portion of the LNG is just created in the decoder memory, no Node is associated with Actor. The NE will incrementally create Actor in a fashion that is describe below.

The strategy is the following:
- At first, the NE maps the root Node of the cluster. The created Actor must be a toplevel Actor or an actor that is linked to an actor associated to a cluster ancestor of the current one. This actor, in turn, will trigger the creation of new actors that will be associated to the sub-nodes.
- The configuration/preparation phase takes place; this phase may involve negotiation between the actors. Some actors may also need loading data for their own configuration (icon ...).

The root cluster of an application is typically the starting point of the user interface of the application; it is automatically loaded and mapped by the NE.

The process of mapping the LNG is the way Actors are created and associated to the Nodes. The actual selection of Actor in the Actor types database is dealt with in another paragraph of the description.

The mapping of the clusters is performed in the following steps:
1. Loading of the cluster that means loading all the nodes of the cluster.
2. Mapping of the root node of the clusters. This involves selecting the right type of actor and creating new actors.
3. Preparing the actor. This step may be done in the background. It enables the actors to load additional data (images) and to perform some configurations (screen configuration, pixmap decompression). This phase may involve negotiation between the actors.
4. The toplevel actor is then activated; this typically results in the display of the graphical hierarchy.

Since the 3 first steps may take time, a wise application may trigger the loading and the mapping of some clusters some time before the display is actually needed.

The NE may decide itself to take this action. The clusters subject to be pre-loaded in this fashion are the clusters connected to the current cluster.

User navigation translates into movements in the LNG from the NE point of view which tracks the current nodes. These movements use the Navigation links. Specifically, user navigation is represented by triggering of Navigation links in the LNG.

Such events are implemented, in the NE, by dedicated NEEvents that are posted by Actors. When a navigation link is triggered, the NE maps the Node (in fact the whole cluster containing it) at the end of the link.

When mapping a Node, the NE may decide to unmap some Nodes, which means to delete some Actors. The mapping of a Node happens to require the mapping of other Nodes located in the descendant of this Node. The actors mapped on a node are responsible to ask the NE to map their sub-nodes.

A specific actor, whose type is "Root", is automatically mapped onto the Root Node by the NE. This actor merely searches for an attribute of name "Start" in this node; then it fires this attribute. Thus, the IAD writer has a chance to have some codes executed when the application starts. These codes must be put in a Link connected to the attribute Start.

The Root actor automatically descends the LNG from the Root node and asks the NE to map its immediate children. There is a function that enables the actors to map a node; this is handled by an NEEvent. The NE ensures that the clusters are loaded and mapped in a top-down manner with respect to the cluster tree.

This makes it possible for an actor to rely on the side effects that the mapping of the top cluster has occurred. For example, a top cluster may induce the creation of an actor that will load a new font in the decoder. This font will be available to the actors associated to the node contained in sub-clusters.

### Memory management

The memory management affects the LNG structures and the actors. Its purpose is to manage the components of the applications depending on:
- Which application is running,
- What part of the application is useful at a given time, this depends on which part of the LNG the user is browsing,
- What part the broadcaster wants to be available to the users.

The memory management concerns 2 types of objects: the clusters and the actors:
- LNG memory management is based on the clusters wherein the NE checks whether a cluster is required or not, i.e. whether some actors are linked to some nodes in this cluster,
- Actor management that is dedicated to manage actors.

The memory management is triggered when the NE is short of memory. In such case, the NE decides what to take out of the memory. This selection is based on the clusters. It is possible to implement an algorithm for discarding the last recently used clusters.

In order to determine the usefulness of a cluster, the NE makes uses of:
- The cluster dependencies (a cluster cannot be discarded before its descendants).
- An actor's usefulness indicator which is managed by the NE.

The broadcast applications present a specific problem regarding:
- The users that have missed the beginning of a program and must have a complete user interface,
- The possible errors in the transmission since the broadcast channel is unidirectional,
- The possibility of using the bitstream as a virtual memory.

The scheme is the following. Considering that any application is made of clusters referred as Ci. At a given time, the LNG that is the useful portion of the IAD, is made of a list of clusters.

These clusters should be broadcast in a cycled manner:
C1 C2 C3 C4 C5 C1 C2 C3 C4 C5 C1 C2 C3 C4 C5...

Since the clusters are repeated, the NE is able to rebuild the whole application at any time, in a delay equal to the cycle length. This constitutes a description of the whole LNG on the bitstream, thus enabling the LNG to use it as a memory.

Some clusters may have to be modified in the course of the application, so some modification messages may be inserted in between: For instance, M2 carries a modification of cluster C2.
C1 C2 C3 M2 C4 C5 C1 C2.1 C3 C4 C5 C1 C2.1 C3 C4 C5 wherein C2.1 is a new version of C2.

If M2 is lost, the NE can load an updated version a short delay afterwards with the following clusters. If C2 was not loaded when M2 were processed, the NE does nothing, but the correct version of cluster C2 will be loaded when the NE loads it.

A possible use of OpenTV modules is to map each clusters to a module. The modification messages should be allocated a specific module. At the beginning, the NE listens to every module it requires. Once loaded, the modules need not be reloaded since the modifications are carried by another module. On the contrary, the module carrying the modification messages is continuously loaded by the NE.

If an instance of this module is lost, the NE holds a wrong version of the cluster and it does not know that it should load the current (and correct) value of the cluster that has been modified. To cope with this problem the modification messages could regularly indicate the version number of each clusters. The NE compares this number with the one it holds and triggers a reload of the clusters.

The scheme concerning static data like Link code, Actor code and description and data module is simpler: these codes need only to be sent cyclically.

The NE will learn that it needs to load these modules from the LNG.

### Input management, Translation and Focus management

The input management tries to solve the following problem:
- Notify the actors when they get or lose the focus in order to enable them to display them accordingly.
- Provide a mechanism for passing the focus from one actor to another in a way that is consistent with the input keys the user presses.

The focus management offers means for directing the user inputs to the appropriate interactive parts of the applications. Normally the actors that are supposed to get the focus are displayed on the screen when the user enters inputs.

The input management is also responsible of enabling shortcut mechanisms: this mechanism makes it possible for an actor to get a key press even without having the focus.

### Input management, Translation and Routing

The user inputs are delivered to the NE through OpenTV messages. These inputs are managed in the NE which parses and processes them. They are eventually passed to the actors. When processing the user inputs, the NE is able to perform some filtering on them such as the focus management, the routing and the translation which means the association of a specific key to an attribute.

The user inputs depend on the device actually available on the decoder. OpenTV provides for translation from the specific device data to OpenTV messages. The MEs are responsible for correctly interpreting the data.

The underlying drivers connected to specific devices are supposed to generate the code depending on the actual device (through OpenTv messages).

The possible devices are the XY pointers and the Vocal input.

User inputs are then normally passed to an actor that owns the focus (through OpenTV UIMS function). The actor may ignore them. In such case, the message is passed to the actor ancestor. This is handled by the OpenTv automatic message routing along with the gadget tree.

Actors that handle shortcuts declare the keys they are interested in a specific attribute, *Shortcut.* When they are activated, the NE will pass them the key press message of interest.

### Circulating the focus

The focus management is performed by the NE instead of being distributed among the ME. The circulation graph is a data downloaded along with the IAD. It describes how the focus must be set from one ME to another ME according the movement key. It is optional. When it is not available, the NE resorts to the default management based on the LNG structure.

Some ME may provide a proper focus management. In such case, the movement key must be sent to them.

The circulation graph is defined on the IAD structure. Each node is associated to data that indicate for each movement key which node must receive the focus. These data are stored in the attribute *"FocusCirculation".* Their values are a list of at most 4 couples (Left/ Right/ Up/ Down, Node ID).

### Color management

Since the graphic hardware of the decoders is based on a palette of color displaying, the value stored into the palette must be put into the context of each application. It is the responsibility of the NE to initialize the palette with the correct value when an application is activated.

The content of the current palette depends on which Actors are displayed at a given time. The needs of them are described by the Colormap attribute of the toplevel Actor. The application may provide a specific version for this actor. A default colormap is provided for the application.

### Font management

The font management is entrusted to OpenTV. The font attribute value is the name of the OpenTV font. A dedicated actor may be responsible for loading the fonts that are needed by the other actors of the application.

### NEEvent and processes

The NE algorithm is based on a main loop that processes events one at a time. The events may be simple events like user input or any other system events. More specific events exist: these events deal with the management of the LNG and the actor and enable an asynchronous management. All these events are handled in a FIFO manner.

Those events may be posted by actors or by the NE itself. There is a list of possible meanings:
- navigate to a node
- register an attribute modification
- change the focus location

### The network interface

The network interface is the module in charge of the exchange of data between the NE and the external world. The considered data include:
- Non-real time data (although some data may need to be loosely synchronized with the a/v materials)
- Real time data a/v materials

The external world is made of a broadcast flow (133), a bi-directional flow (131) and a data storage (140):
1. The broadcast flow (133) is managed by OpenTV through the concept of program that includes both real-time and non-real time data.
   The non-real time flow is structured by OpenTV modules. Each of them has a unique ID and a size. Their transmission over the network is likely to be cycled. The number of possible type of modules is potentially large but the number of types of modules that can be simultaneously waited for is small (dependent on local hardware resource: 30-70). Similar functions are likely to be available with DSM-CC data carousel.
   The Open TV module ID provides a first naming scheme within these data. This naming is currently limited to the scope of a so-called OpenTv application.
   The real-time components of a program are also accessed by ID.
2. The bi-directional flow (131) conveyed by the serial port or the modem, referred as the return channel is managed by OpenTV through the concept of program provider with which bi-directional connections may be established (OpenTV sockets). Asynchronous message exchanges can take place over this channel. Connections with many services may be open at the same time.
   Future TCP/IP may replace the OpenTV sockets.
3. The data stored on any media or data storage (140) connected to the decoder, namely a DVD, DVD ROM or CD ROM. There is no standard protocol designed for handling data exchanges with this media although DSM CC deals with this subject.

The goal is to provide an interface for the NE as clean as possible that hides the details of the underlying network. However, these actual devices have various capabilities that must be taken into account. The needs of the NE regarding the network are as follows:
- Receive pieces of IAD or IAD messages asynchronously, i.e. without having to request anything. The size of these data is known in advance. It should be noted that the number of data required at a given time may be small compared to the total available;
- Receive pieces of IAD or IAD messages synchronously, i.e. involving a request followed by an answer;
- Receive data for the data loading.

The solution is to define a naming scheme which encompasses the 3 media along with a set of functions that ultimately rely on the available network management layers. This naming is used within the LNG when portions of LNG are referred from other portion already loaded (navigation link, data loading). It will be used also for selecting a/v data. This naming will be handled by the NE and translated into actual lower protocol.

The naming is based on service names and component names referred as <service name>,<component-x>,<sub-component-y>. The NE is responsible of the "resolution" of the names that determine which type of network the data should be brought.

## Claims

1. A method for executing a plurality of interactive multimedia applications transmitted from an interactive multimedia applications source (140, 150, 160) to a processing means (130);
said method comprising the steps of:
(a) loading said plurality of interactive multimedia applications (210) into said processing means (130) wherein said plurality of interactive multimedia applications are based on a plurality of nodes (211,212,...) for data representation and a plurality of links binding said nodes for dynamic representation;
(b) creating interactive graphical representation (220) having a hierarchical structure composed of interactive elements (221,222,...) so that said interactive elements represent an interface between said nodes and a user (120);
(c) mapping said interactive graphical representation (220) to said interactive elements (221,222,...) so as to enable the user to interact with the interactive multimedia applications by associating each said nodes (211,212,...) to each said interactive elements (221,222,...);
(d) executing said plurality of interactive multimedia applications in said processing means (130) in response to user's commands.

2. The method according to claim 1 wherein said nodes are linked by structural links for supporting representation of said plurality of interactive multimedia applications on a displaying means (110) and navigation links for navigating in said plurality of interactive multimedia applications.

3. The method according to claim 1 or 2 further comprising the step of defining sets of nodes (410,420,...) connected together to form graphs representing minimum interactive multimedia applications so as to enable to load said plurality of interactive multimedia applications part by part.

4. The method according to claim 3 wherein said set of nodes are connected by said structural links within a cluster which is composed of indivisible parts of said plurality of interactive multimedia applications so as to allow navigation between the clusters.

5. The method according to claim 4 wherein said clusters have a hierarchy tree graph (410,420,...) from root clusters (440,450) to a top cluster (410) which groups parts that are common to all the interactive multimedia applications.

6. The method according to any one of claim 4 or 5 further comprising the step of managing said plurality of interactive multimedia applications by discarding useless clusters or by loading needed data from said interactive multimedia applications source (140, 150, 160).

7. The method according to any one claim 4, 5, or 6 further comprising the step of preloading and premapping clusters that are connected to a current cluster so as to anticipate future use of said clusters.

8. The method according to any one of the previous claims wherein each one of said nodes (211,212,...) comprises attributes characterizing their specificity with at least a name and a value representing a dynamic data structure which may change during the application execution.

9. The method according to any one of the previous claims wherein said step of loading said plurality of interactive multimedia applications further comprising the steps of storing parts of said plurality of interactive multimedia applications in an additional storing means like a DVD.

10. A method for managing a plurality of interactive multimedia applications transmitted from an interactive multimedia applications source (140, 150, 160) to a processing means (130) containing a local data storage, wherein said plurality of interactive multimedia applications being based on a hierarchy of a plurality of set of nodes (410,420,...) for a minimum data representation of said plurality of interactive multimedia applications and a plurality of links binding said nodes and said set of nodes for dynamic representation;
said method comprising the steps of:
(a) selecting sets of nodes (410,420,...) that are the last recently used;
(b) discarding gradually from said local data storage among said selected sets of nodes, the ones that are at the bottom of said hierarchy;
(c) loading required set of nodes in said processing means (130) in response to user's commands.

11. The managing method of claim 10 wherein said set of nodes are broadcast in a cycled manner so as to allow the loading of required set of nodes in said processing means (130) part by part.

12. The managing method of claim 10 or 11 wherein an indicator of usefulness is associated with said set of nodes so as to determine dynamically their usefulness.

13. The managing method of claim 10, 11 or 12 further comprises the step of directing inputs of user's commands to the appropriate parts of said interactive multimedia applications by tracking the focused interactive elements.

14. The managing method of claim 13 wherein a circulation graph is associated with said input of user's commands so as to this focus management.

15. An apparatus for executing a plurality of interactive multimedia applications transmitted from an interactive multimedia applications source (140, 150, 160) to a processing means (130);
said apparatus characterized in that it comprises:
- means for loading said plurality of interactive multimedia applications (210) into said processing means (130) wherein said plurality of interactive multimedia applications are based on a plurality of nodes (211,212,...) for data representation and a plurality of links binding said nodes for dynamic representation;
- means for creating interactive graphical representation (220) having a hierarchical structure composed of interactive elements (221,222,...) so that said interactive elements represent an interface between said nodes and a user (120); and
- means for mapping said interactive graphical representation (220) to said plurality of interactive multimedia applications (210) so as to associate each said nodes (211,212,...) to each said interactive elements (221,222,...).

16. The apparatus according to claim 15 further comprising:
- means for building structural links for supporting representation of said plurality of interactive multimedia applications; and
- means for building navigation links for navigating in said plurality of interactive multimedia applications.

17. The apparatus according to claim 16 further comprising means for defining sets of nodes (410,420,...) connected together to form hierarchical graphs representing minimum interactive applications.

18. The apparatus according to claim 17 further comprising means for managing said sets of nodes by discarding useless sets of nodes and loading needed data from said interactive multimedia applications source (140, 150, 160).

19. The apparatus according to claim 18 further comprising means for storing additional parts of said plurality of interactive so as to preload and premap set of nodes that are connected to a current set of nodes so as to anticipate future use.

20. An apparatus for managing a plurality of interactive multimedia applications transmitted from an interactive multimedia applications source (140, 150, 160) to a processing means (130) containing a local data storage, wherein said plurality of interactive multimedia applications being based on a hierarchy of a plurality of set of nodes (410,420,...) for a minimum data representation of said plurality of interactive multimedia applications and a plurality of links binding said nodes and said set of nodes for dynamic representation;
said apparatus characterized in that it comprises:
- means for selecting sets of nodes (410,420,...) that are the last recently used;
- means for discarding gradually from said local data storage among said selected sets of nodes, the ones that are at the bottom of said hierarchy; and
- means for loading useful set of nodes in said processing means (130) in response to user's commands.

21. The managing method of claim 20 wherein said set of nodes are broadcast in a cycled manner so as to allow the loading of required set of nodes in said processing means (130) part by part.
